# EUROPEAN PATENT APPLICATION

(11) **EP 1 387 467 A1**
(43) Date of publication of application: **04.02.2004**
(21) Application number: 03291621.5
(22) Date of filing: 01.07.2003
(51) Int. Cl.: H02K 11/00, H02K 7/116, E05F 15/00

(54) **Window lifter geared motor assembly and window lifter**

(30) Priority: 30.07.2002 FR 0209684
(71) Applicant: ArvinMeritor Light Vehicle Systems-France, 45600 Sully sur Loire (FR)
(72) Inventor: Fournier, Gérard, 14123 IFS (FR)
(74) Representative: Cabinet Hirsch Groupement 161

(57) **Abstract**

A window lifter geared motor assembly (1) comprising,
- a housing (2),
- an electric motor (3) in the housing (2),
- a damper (4) damping the movements of the electric motor (3) in the housing (2).

The advantage of the invention is that the damper occupies a position that is immobile with respect to the housing; this allows the damper not to experience movements likely to cause its characteristics to vary.

## Description

The present invention relates to a window lifter geared motor assembly and to a window lifter comprising such a geared motor assembly.

Numerous equipment items in motor vehicles are operated using a geared motor assembly. For example, the rear-view mirrors, the window lifter windows or sunroof are increasingly often driven by these geared motor assemblies. However, it is possible for an object to impede the movement of the equipment, and this may cause the geared motor assembly to block. The blocking of the geared motor assembly may damage it.

In a geared motor assembly comprising a reduction gearset driven in rotation by an electric motor, it has been proposed for the geared motor assembly to be protected by a rubber damper in the gearset. Nonetheless, as the damper is driven in rotation by the gearset, the damper experiences variations in temperature. The characteristics of the damper therefore vary during use of the geared motor assembly and the quality of the protection afforded to the geared motor assembly in the event of blockage decreases.

There is therefore a need for a geared motor assembly that is protected reliably in the event of blocking.

For that, the invention proposes a window lifter geared motor assembly comprising,
- a housing,
- an electric motor in the housing,
- a damper damping the movements of the electric motor in the housing.

According to one embodiment, the geared motor assembly may further comprise a drive shaft driven in rotation about its axis by the electric motor, the electric motor and the shaft being able to move in the housing along the axis and the damper damping the movements of the motor and of the shaft along the axis.

According to one embodiment, the damper may damp the movements of the motor in one direction along the axis. In this case, the damper may comprise a spring between the housing and the motor.

According to another embodiment, the damper may damp the movements of the motor in both directions along the axis. In this case, the damper may comprise two tension-compression springs between the housing and the motor, on each side of the motor along the axis.

According to one embodiment, the geared motor assembly may further comprise a sensor, the state of which is dependent upon the movements of the motor and of the shaft along the axis. Advantageously, the shaft may be guided with respect to the sensor by a bearing on which the sensor is placed.

According to another embodiment, reduction the gearset may be driven in rotation about a shaft, the shaft being guided with respect to the housing by a bearing on which the sensor is placed.

According to another embodiment, the sensor may be fixed with respect to the housing.

Advantageously, the driving of the drive shaft may be a function of the sensor state.

The invention also relates to a window lifter comprising a geared motor assembly as described hereinabove.

Other features and advantages of the invention will become apparent from reading the detailed description which follows of some embodiments of the invention given solely by way of example and with reference to the drawings which show:
- Figure 1 a sectioned view of a geared motor assembly according to the invention;
- Figure 2 a view from above of the geared motor assembly of Figure 1;
- Figure 3, a front view of the geared motor assembly of Figure 1.

The invention relates to a geared motor assembly comprising a housing in which there is located an electric motor, a damper damping the movements of the electric motor in the housing. The advantage is that of damping the relative movement of two elements that are not rotationally driven. The mechanical properties of the damper do not vary because of torsional deformation. This allows the geared motor assembly to be protected reliably in the event of it blocking.

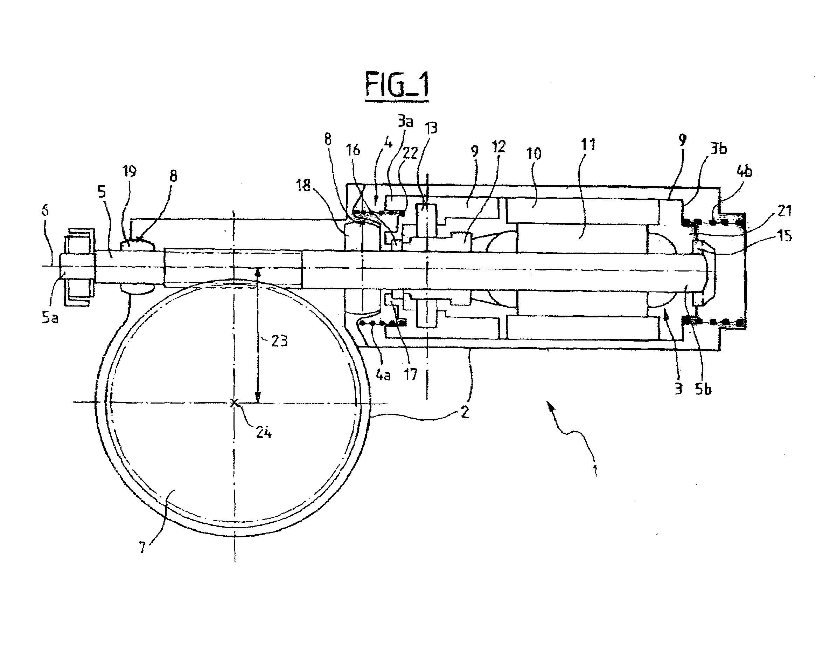

Figure 1 shows a sectioned view of a geared motor assembly 1 according to one exemplary embodiment. The geared motor assembly 1 comprises a housing 2 and an electric motor 3 in the housing 2. A damper 4 damping the movements of the electric motor 3 in the housing 2 is preferably between the housing 2 and the electric motor 3. The damper 4 is arranged between two components of the geared motor assembly 1 which are not rotationally driven. The advantage is that the damper 4 occupies an immobile position with respect to the housing 2; that allows the damper 4 not to experience movements other than those associated with its damping function likely to cause a variation in its mechanical properties. This position of the damper 4 allows it to be more temperature-stable than it would be if it were rotationally driven for example, and not to experience temperature variations detrimental to its mechanical properties.

The electric motor 3 comprises an casing 9 with, inside it, a stator 10 and a rotor 11. The damper 4 is urged against the casing 9 which does not have its own translational or rotational movement imparted to it. The casing 9 in contrast experiences movements such as vibrations due to the operation of the electric motor 3 or to movements such as translational movements in the event of the geared motor assembly becoming blocked. The rotor 11 for example comprises, in the known way, windings wound around stacked laminations. A communator 12 is electrically connected to the rotor 11 and, via brushes 13, receives the current powering the electric motor 3.

The geared motor assembly 1 further comprises a drive shaft 5 with an axis 6, the shaft 5 being rotationally driven about its axis 6 by the electric motor 3. The drive shaft 5 is connected by one of its ends 5a in the casing 9 to the rotor 11, the end 5b of the shaft 5, extending out of the casing 9. The end 5a of the drive shaft 5 is guided with respect to the casing 9 by a bearing 15. The drive shaft 5 comprises a shoulder 16 which bears against a flange 17 of the casing 9. The drive shaft 5 is restrained in terms of translation along its axis 6 with respect to the casing 9 by the bearing 15 and by the collaboration between the flange 17 and the shoulder 16. The drive shaft 5 is secured to the electric motor 3. The drive shaft 5 and the electric motor 3 are mounted so that they can move in the housing in the sense that there is some axial assembly play along the axis 6 in the housing 2.

The drive shaft 5 rotationally drives the reduction gearset 7. The gearset 7 is connected to the winding drum of the window lifter cable (not depicted). The connection between the gearset 7 and the drive shaft 5 is, for example, a worm and wheel connection. The drive shaft 5 has a screw thread on its part outside the casing 9. The reduction gearset is a gearwheel that meshes with the thread on the shaft 5. Rotation of the electric motor 3 in one direction or the other causes the window to move up or down.

When the electric motor 3 is actuated and causes the window to move up or down, an object may impede the movement of the window. The gearset 7 connected to the window via the drum, the cable and the slider (not depicted) is then blocked in its rotational movement. Rotational drive of the shaft 5 by the electric motor 3 not being interrupted, the drive shaft 5 then experiences a sudden translational movement along its axis 6. The direction of movement of the shaft 5 along its axis 6 depends on the direction in which the electric motor 3 is turning. As the drive shaft 5 is secured to the electric motor 3, the electric motor experiences movement along the axis 6. As the inertia of the motor 3 is greater than that of the shaft 5, it is particularly advantageous to damp the movements of the shaft 5 by damping the movements of the electric motor 3 in the housing 2 using the damper 4. The damping of the movements of the motor 3 allow the worm and wheel connection between the drive shaft 5 and the gearset 7 to be protected.

The damping of the movements of the electric motor 3 in the housing 2 also makes it possible to avoid the phenomenon of rattling that occurs in the gearset 1 upon startup. When the drive shaft 5 is started up, the shaft 5 bears against the still immobile gearset 7 and experiences translation along its axis 6. The shaft 5, secured to the motor 3, then via one end 5a, 5b, comes into abutment against the housing 2 and this generates a rattling noise. The damping of the movement of the electric motor 3 in the housing 2 makes it possible to avoid this noise and protect the window lifter against wear.

The damping of the movements of the electric motor 3 in the housing 2 also makes it possible to damp the movement of the window at the end of its travel in the door. When the window has been fully lowered or raised, it is then blocked. The damper 4 then affords the same advantages as it does when the window is impeded by an obstacle in its movement.

The damper 4 can damp the movements of the electric motor 3 in one direction along the axis 6. In Figure 1, the damper 4 is therefore arranged between one end 3b of the electric motor 3 and the housing 2 (to the right in Figure 1). Depending on the direction of rotation of the motor 3 and when one of the phenomena already described arises, the damper 4 damps the movement of the electric motor 3 from left to right in Figure 1. The damper 4 prevents the motor 3 from coming into contact with the housing 2 and protects the gearing between the shaft 5 and the gearset 7.

Alternatively, the damper 4 may damp the movements of the electric motor 3 in the other direction along the axis 6. In Figure 1, the damper 4 is then arranged between the other end 3a of the electric motor 3 and the housing 2 (to the left in Figure 1). The advantages described in the above paragraph are repeated.

As a preference, the damper 4 damps the movement of the motor 4 in both directions along the axis 6. The damper 4 is then arranged between the two ends 3a and 3b of the electric motor 3. This makes it possible always to damp the movements of the electric motor 3 whatever the direction in which the motor 3 is turning. The presence of the damper 4 along the axis 6 allows the damper to be stressed in compression and in tension.

According to another preferred embodiment, the damper 4 comprises a spring. The spring is positioned more readily at the end 3a or 3b of the motor 3. In particular, the spring is more readily positioned at the end 3a of the electric motor 3 where the drive shaft 5 projects from the casing 9. The spring may thus be positioned between the housing 2 and the end 3a of the motor 3 and surround the shaft 5. The spring may be held on the casing 9 of the motor 3 by shapings made on the casing 9 to guide the shaft 5. At the end 3a of the motor 3, the spring 4a can be held in a groove 22 around the flange 17. At the end 3b of the motor 3, the spring 4b may be arranged on a shoulder 21 produced to hold the bearing 15. If it is desired for the motor 3 to be damped in both directions along the axis 6, the damper 4 comprises two springs 4a, 4b between the housing 2 and the motor 3, on each side of the motor 3 along the axis 6. By way of example, the springs may have a spring rate of 60 N/mm.

Advantageously, the geared motor assembly 1 may comprise a sensor 8 allowing operation of the geared motor assembly 1 to be interrupted when the gearset 7 is blocked. This makes it possible to improve the protection of the gearing between the drive shaft 5 and the reduction gearset 7. The driving of the drive shaft 5 is dependent upon the state of the sensor. Thus, the sensor 8 allows operation of the geared motor assembly to be interrupted when the movement of the window of the window lifter is impeded by a hand. The sensor thus makes it possible to avoid the trapping of the hand. For unambiguous detection of the blocking of the window on the part of the sensor 8, it is preferable for the driveline between the obstacle on the window and the sensor 8 to be rigid. A driveline is to be understood, in a window lifter, to mean the sequence comprising window, slider on window, cable, drum, reduction gearset, drive shaft and electric motor. As the damper interrupts this rigidity, it is therefore not desirable for the damper 4 to lie between the sensor 8 and the obstacle.

The geared motor assembly 1 thus has the advantage of offering numerous points at which the sensor 8 can be positioned along the driveline because the damper 4 is situated at the end of the line, between the motor 3 and the housing 2.

Advantageously, the sensor 8 is fixed with respect to the housing 2. That makes it far easier to connect the terminals of the sensor 8 to the sensor state processing circuit (not depicted). The expression "fixed" is to be understood as meaning that the sensor is not driven in a rotational or translational movement by the part supporting it. The presence of a damper 4 between the housing 2 and the motor 3 offers various locations at which the sensor 8 is fixed with respect to the housing 2.

According to one embodiment, the state of the sensor 8 is dependent upon the movements of the motor 3 and of the shaft 5 along the axis 6. When the gearset 7 is blocked in its rotation via an obstacle impeding the movement of the window, the motor 3 and the shaft 5 experience a movement along the axis 6. The sensor 8 is able to detect this translational movement.

In Figure 1, the sensor 8 may be placed on one of the bearings 18, 19 that guide the drive shaft 5. Translational movement of the shaft 5 is detected by the sensor which is fixed with respect to the housing 2.

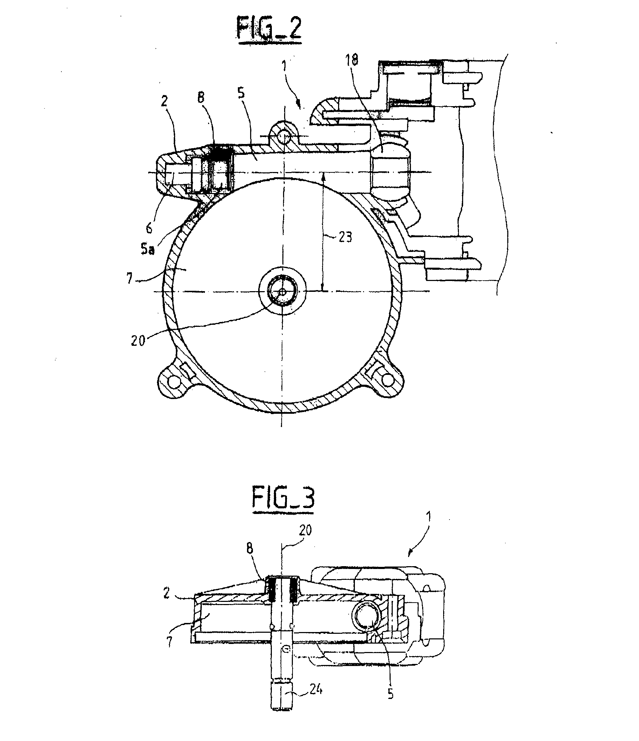

Figure 2 shows a view from above of the geared motor assembly 1. In this figure, the bearing 19 is not depicted. According to this mode of operation, the sensor 8 is positioned at the end 5a of the shaft 5 in the housing. This location is particularly advantageous for the connecting of the sensor 8 to the sensor state processing circuit via the housing 2.

Figure 3 shows a front view of the geared motor assembly 1. The reduction gearset 7 is rotationally driven by the drive shaft 5 about a reduction shaft 24. The reduction shaft 24 is guided with respect to the housing 2 by a bearing, not depicted. The sensor 8 may be arranged on the bearing. This sensor detects the force of separation of the sets of teeth.

The sensor 8 may also be used to detect that the window has reached the upper or lower end of its travel in the door. Detection is done in the same way as in the case of an obstacle impeding the movement of the window.

It is also possible to provide a plurality of sensors 8, thus improving the quality with which blockage of the gearset 7 is detected.

It is possible for example to use a piezoresistive sensor known per se and available commercially, the electrical impedance of which increases in proportion to the load applied to its two faces. It is also possible to use a sensor exhibiting a capacitance, an inductance or more generally an impedance, the value of which varies as a function of the load applied to it. Such a sensor is compact and may have terminals ready for connecting. The response time of the sensors is preferably shorter than 25 ms.

The invention also relates to a window lifter comprising a geared motor assembly 1 as described. The geared motor assembly 1 allows the window lifter to interrupt its operation when the window is at the top or bottom end of its travel, or when an obstacle impedes the operation of the window. Interruption avoids trapping the obstacle, that may be a hand, and protects the geared motor assembly.

Of course, the present invention is not restricted to the embodiments described by way of example. Thus, the sensor or sensors may be employed independently of the damper. Furthermore, the geared motor assembly described may be the one used to operate a sunroof. It may also be used to move a car seat. The invention is particularly advantageous when the leg of a rear-seat passenger impedes the sliding of the seat. Nor is the invention limited to a housing surrounding the entirety of the geared motor assembly.

## Claims

1. A window lifter geared motor assembly (1) comprising,
- a housing (2),
- an electric motor (3) in the housing (2),
- a damper (4) damping the movements of the electric motor (3) in the housing (2).

2. The geared motor assembly according to Claim 1, **characterized in that** the geared motor assembly (1) further comprises a drive shaft (5) driven in rotation about its axis (6) by the electric motor (3), the electric motor (3) and the shaft (5) being able to move in the housing along the axis (6) and the damper (4) damping the movements of the motor (3) and of the shaft (5) along the axis (6).

3. The geared motor assembly according to Claim 2, **characterized in that** the damper (4) damps the movements of the motor (3) in one direction along the axis (6).

4. The geared motor assembly according to one of Claims 2 and 3, **characterized in that** the damper (4) comprises a spring (4a) between the housing (2) and the motor (3).

5. The geared motor assembly according to Claim 2, **characterized in that** the damper (4) damps the movements of the motor (5) in both directions on the axis (3).

6. The geared motor assembly according to Claim 5, **characterized in that** the damper (4) comprises two tension-compression springs (4a, 4b) between the housing (2) and the motor (3), on each side of the motor (3) along the axis (6).

7. The geared motor assembly according to one of Claims 2 to 6, **characterized in that** the geared motor assembly (1) further comprises a sensor (8) the state of which is dependent upon the movements of the motor (3) and of the shaft (5) along the axis (6).

8. The geared motor assembly according to Claim 7, **characterized in that** the shaft (5) is guided with respect to the housing (2) by a bearing on which the sensor (8) is placed.

9. The geared motor assembly according to Claim 7 or 8, **characterized in that** the reduction gearset (7) is driven in rotation about a shaft (24), the shaft (24) being guided with respect to the housing (2) by a bearing (18, 19) on which the sensor (8) is placed.

10. The geared motor assembly according to one of Claims 7 to 9, **characterized in that** the sensor (8) is fixed with respect to the housing (2).

11. The geared motor assembly according to one of Claims 7 to 10, **characterized in that** the driving of the drive shaft (5) is dependent upon the state of the sensor (8).

12. A window lifter comprising a geared motor assembly (1) according to one of the preceding claims.
